# EUROPÄISCHE PATENTSCHRIFT

(11) **EP 3 926 167 B1**
(45) Veröffentlichungstag und Bekanntmachung des Hinweises auf die Patenterteilung: **28.01.2026**
(21) Anmeldenummer: 21179052.2
(22) Anmeldetag: 11.06.2021
(51) Int. Cl.: F03D 80/10

(54) **ANORDNUNG UND VERFAHREN ZUM STEUERN EINER BEDARFSGERECHTEN HINDERNISBEFEUERUNG EINER WINDENERGIEANLAGE UND WINDENERGIEANLAGE**
WIND TURBINE AND ARRANGEMENT AND METHOD FOR CONTROLLING NEEDS-BASED OBSTACLE LIGHTING OF A WIND TURBINE
AGENCEMENT ET PROCÉDÉ DE COMMANDE D'UN BALISAGE D'OBSTACLE EN FONCTION DES BESOINS D'UNE ÉOLIENNE ET ÉOLIENNE

(30) Priorität: 15.06.2020 DE 102020115744
(43) Veröffentlichungstag der Anmeldung: 22.12.2021
(73) Patentinhaber: Dark Sky GmbH, 17033 Neubrandenburg (DE)
(72) Erfinder: Herrholz, Thomas, 17099 Galenbeck OT Schwichtenberg (DE)
(74) Vertreter: Bittner, Thomas L.

(56) Entgegenhaltungen:
- EP-B1- 2 546 519
- DE-A1- 102013 004 463
- DE-A1- 102015 116 596
- US-A1- 2014 300 497
- US-A1- 2018 266 397
- US-B2- 9 804 262

## Beschreibung

Die Erfindung betrifft eine Anordnung zum Steuern einer bedarfsgerechten Hindernisbefeuerung einer Windenergieanlage und Windenergieanlage.

### Hintergrund

Die Hindernisbefeuerung dient bei Windenergieanlagen dazu, diese zu kennzeichnen, insbesondere auch in der Nacht und bei schlechter Sicht, so dass Flugobjekte wie Flugzeuge und Hubschrauber Kollisionen vermeiden können. Hierbei kann vorgesehen sein, die Warnlichter der Hindernisbefeuerung nur dann zu aktivieren, wenn sich ein Flugobjekt der Windenergieanlage kritisch nähert. So können Lichtemissionen, die Anwohner in der Nähe der Windenergieanlage beeinträchtigen können, gemindert werden. Zum anderen können auf diese Weise gesetzliche Vorgaben der Luftverkehrssicherheit eingehalten werden, da nur die für den jeweiligen Flugobjektführer relevanten Hinderniskennzeichnungen aktiv sind.

Bei einer radargesteuerten Hindernisbefeuerung wird zwischen Aktiv- und Passivradar unterschieden. Beides sind sogenannte Primärradare. Beim Aktivradar werden von Antennen im Windpark mit Windenergieanlagen elektromagnetische Impulse erzeugt, die an Flugobjekten reflektiert und mit Hilfe von Detektoren erfasst werden. Hierdurch können Rückschlüsse auf die Flugroute des Flugobjekts gezogen werden, um die Hindernisbefeuerung bedarfsgerecht zu steuern. Das Passivradar wertet demgegenüber den Dopplereffekt und die Reflexionen kontinuierlich bestehender elektromagnetischer Wellen an Luftfahrzeugen aus.

Neben dem Primärradar besteht die Möglichkeit des Einsatzes eines Sekundärradars. Hierbei empfängt ein im Windpark installierter Sensor Transpondersignale, die von Flugzeugen und Hubschraubern ausgesendet werden. Die Transpondersignale können Informationen über die momentane Flughöhe und Position des Flugobjekts umfassen. In Abhängigkeit von den empfangenen Transpondersignalen wird dann die Hindernisbefeuerung bedarfsgerecht gesteuert, beispielsweise derart, dass die Warnlichter nur dann eingeschaltet werden, wenn das Transpondersignal eine Flughöhe unterhalb eines vorgegebenen Schwellwerts und eine Position innerhalb einer definierten Entfernung anzeigt. Anderenfalls können die Warnlichter der Hindernisbefeuerung ausgeschaltet werden oder bleiben.

Das Dokument US 2014 / 0 300 497 A1 betrifft ein Verfahren zur Steuerung der Flugbefeuerung eines Windparks mittels einer akustischen Überwachung, wobei der Windpark eine akustische Überwachungseinrichtung mit einer Mikrofonanordnung aufweist, wobei die Mikrofonanordnung Schallsignale, Geräusche oder dergleichen aus der Umgebung des Windparks aufnimmt und diese Schallsignale in einer mit der Mikrofonanordnung verbundenen Signalverarbeitungseinrichtung verarbeitet werden, wobei eine Schalteinrichtung zum Einschalten einer Flugbefeuerungseinrichtung wenigstens einer Windenergieanlage des Windparks vorhanden ist und die Schalteinrichtung mit der Signalverarbeitungseinrichtung gekoppelt und von dieser gesteuert wird, sodass die Signalverarbeitungseinrichtung die Schalteinrichtung zur Einschaltung der Flugbefeuerung veranlasst, wenn mittels der akustischen Überwachungseinrichtung ein Schallsignal eines Flugobjekts detektiert wird und / oder ein vorbestimmtes Tonsignal durch die Geräusche des Flugobjekts überlagert und / oder verfälscht wird.

In dem Dokument US 9 804 262 B2 ist ein Radarsystem für eine Windkraftanlage offenbart. Das Radarsystem umfasst eine erste Radareinheit und eine Steuereinheit, die angeordnet ist, um eine Ausgabe von der Radareinheit zu empfangen, wobei die Steuereinheit eine zentrale Verarbeitungseinheit umfasst. Die zentrale Verarbeitungseinheit ist so konfiguriert, dass sie eine erste Funktion ausführt, bei der sie mindestens eine Eigenschaft von Flugzeugen innerhalb einer Überwachungszone in der Nähe der Windturbine bestimmt und eine Warnvorrichtung so steuert, dass sie auf der Grundlage der bestimmten Eigenschaft ein Warnsignal an erfasste Flugzeuge ausgibt; und eine zweite Funktion ausführt, bei der sie mindestens einen Parameter des in der Nähe der Windturbine herrschenden Wetters bestimmt.

Das Patent EP 2 546 519 B1 betrifft eine Anordnung mit wenigstens einer Windenergieanlage, wobei ein Radarsystem vorgesehen ist, welches als ein Passivradarsystem mit einer Radardetektoreinrichtung ausgeführt und konfiguriert ist, einen der wenigstens einen Windenergieanlage zugeordneten Luftraum mittels Passivradar zu überwachen und überwachungsabhängig Überwachungssignale zu erzeugen.

DE 10 2015 116596 A1 offenbart die Bereitstellung eines Windparkflugbefeuerungssystems, das Fehlfunktionen aufgrund ausfallender Transpondersignale minimieren soll. Sendestationen sind vorgesehen, die elektromagnetische Wellen oder Schallwellen aussenden. Dies würde der Gefahr eines ausfallenden Flugtransponders vorbeugen; dies könne sofort bemerkt werden. Ferner ist eine eigene Auswerteeinrichtung, mit der die Flugobjektpositionen nur anhand der mit der jeweiligen Empfangsstation detektiert werden, und eine eigene Schalteinrichtung, mit der nur anhand der detektierten Flugobjektpositionen mit der jeweiligen Auswerteeinrichtung die Flugbefeuerungseinrichtung ein- und abgeschaltet werden, offenbart.

### Zusammenfassung

Aufgabe der Erfindung ist es, eine Anordnung und ein Verfahren zum Steuern einer bedarfsgerechten Hindernisbefeuerung einer Windenergieanlage sowie eine Windenergieanlage anzugeben, die mit denen eine verbesserte Sicherheit betreffend die Hindernisbefeuerung erreicht ist.

Zur Lösung ist eine Anordnung sowie ein Verfahren zum Steuern einer bedarfsgerechten Hindernisbefeuerung einer Windenergieanlage nach den unabhängigen Ansprüchen 1 und 14 geschaffen. Weiterhin ist eine Windenergieanlage nach Anspruch 13 vorgesehen. Ausgestaltungen sind Gegenstand abhängiger Unteransprüche.

Nach einem Aspekt ist eine Anordnung zum Steuern einer bedarfsgerechten Hindernisbefeuerung einer Windenergieanlage mit folgenden Merkmalen geschaffen: eine Signalisierungseinrichtung, die eingerichtet ist, Steuersignalen entsprechend optische Signale abzugeben; eine Schalteinrichtung, die mit der Signalisierungseinrichtung verbunden und eingerichtet ist, die Signalisierungseinrichtung zum Abgeben der optischen Signale den Steuersignalen entsprechend zu schalten; und eine Steuereinrichtung. Die Steuereinrichtung weist Folgendes auf: ein erstes Steuerteilsystem mit einem Sekundärradarsystem, einer ersten Antenneneinrichtung und einer ersten Empfangseinrichtung, die der ersten Antenneneinrichtung zugeordnet und eingerichtet ist, über die erste Antenneneinrichtung als erste Empfangssignale Transpondersignale von Flugobjekten zu empfangen, sowie ein zweites Steuerteilsystem, welches von dem ersten Steuerteilsystem verschieden ist, mit mindestens einem der folgenden Systeme: Primärradarsystem und Funkempfängersystem, einer zweiten Antenneneinrichtung und einer zweiten Empfangseinrichtung, die der zweiten Antenneneinrichtung zu-geordnet und eingerichtet ist, über die zweite Antenneneinrichtung als zweite Empfangssignale Primärradar- und / oder Funksignale der Flugobjekte zu empfangen. Die Steuereinrichtung eingerichtet ist: in einer Normalbetriebsart, wenn zumindest die ersten Empfangssignale empfangen werden, die Steuersignale in Abhängigkeit von zumindest den ersten Empfangssignalen bereitzustellen und an die Schalteinrichtung zu geben; und in einer Rückfallbetriebsart, wenn die zweiten Empfangssignale nicht aber die ersten Empfangssignale empfangen werden, die Steuersignale in Abhängigkeit von den zweiten Empfangssignalen bereitzustellen und an die Schalteinrichtung zu geben.

Weiterhin ist eine Windenergieanlage mit einer solchen Anordnung zum Steuern einer bedarfsgerechten Hindernisbefeuerung vorgesehen.

Ein anderer Aspekt betrifft eine Verfahren zum Steuern einer bedarfsgerechten Hindernisbefeuerung einer Windenergieanlage, die Folgendes aufweist: eine Signalisierungseinrichtung, die eingerichtet ist, Steuersignalen entsprechend optische Signale abzugeben; eine Schalteinrichtung, die mit der Signalisierungseinrichtung verbunden und eingerichtet ist, die Signalisierungseinrichtung zum Abgeben der optischen Signale den Steuersignalen entsprechend zu schalten; und eine Steuereinrichtung. Die Steuereinrichtung weist Folgendes auf: ein erstes Steuerteilsystem mit einem Sekundärradarsystem, einer ersten Antenneneinrichtung und einer ersten Empfangseinrichtung, die der ersten Antenneneinrichtung zugeordnet und eingerichtet ist, über die erste Antenneneinrichtung als erste Empfangssignale Transpondersignale von Flugobjekten zu empfangen, sowie ein zweites Steuerteilsystem, welches von dem ersten Steuerteilsystem verschieden ist, mit mindestens einem der folgenden Systeme: Primärradarsystem und Funkempfängersystem, einer zweiten Antenneneinrichtung und einer zweiten Empfangseinrichtung, die der zweiten Antenneneinrichtung zu-geordnet und eingerichtet ist, über die zweite Antenneneinrichtung als zweite Empfangssignale Primärradar- und / oder Funksignale der Flugobjekte zu empfangen. In einer Normalbetriebsart, wenn zumindest die ersten Empfangssignale (in der Steuereinrichtung) empfangen werden, stellt die Steuereinrichtung die Steuersignale in Abhängigkeit von zumindest den ersten Empfangssignalen bereit und gibt diese an die Schalteinrichtung. In einer Rückfallbetriebsart, wenn die zweiten Empfangssignale nicht aber die ersten Empfangssignale (in der Steuereinrichtung) empfangen werden, stellt die Steuereinrichtung die Steuersignale in Abhängigkeit von den zweiten Empfangssignalen bereit und gibt diese an die Schalteinrichtung gibt. Die Schalteinrichtung schaltet die Signalisierungseinrichtung in der Normalbetriebsart und in der Rückfallbetriebsart den jeweiligen Steuersignalen entsprechend.

Das Primärradarsystem kann mit mindestens einem der folgenden Radarsysteme gebildet sein: Aktivradarsystem und Passivradarsystem. Beim Primärradarsystem sendet eine Sendeeinrichtung Sendesignale aus, um dann die Primärradar- und / oder Funksignale zu empfangen.

Das zweite Steuerteilsystem erfüllt im Vergleich zum ersten Steuerteilsystem nur reduzierte Anforderungen an eine sichere Luftraumüberwachung und ist auf eine "Warnung im letzten Moment" abgestimmt. Hierzu können eine oder mehrere der folgenden Ausgestaltungen vorgesehen sein. Eine von der zweiten Antenneneinrichtung umfasste Primärradarantenne des Primärradarsystems kann einen vertikalen Öffnungswinkel von höchstens etwa 30 Grad aufweisen. Die Primärradarantenne des Primärradarsystems kann eine Antennenreichweite von höchstens etwa 25 km aufweisen. Die Primärradarantenne des Primärradarsystems kann eingerichtet sein, (nur) Objekte mit einem Radarquerschnitt von wenigstens etwa 1 qm zu erkennen.

Das zweite Steuerteilsystem kann mittels des Funkempfängersystems eingerichtet sein, die zweiten Empfangssignale Notfall-Funksignale umfassend zu empfangen, die auf Notfallfunkfrequenzen übertragen werden.

Die Steuereinrichtung kann eingerichtet sein, in der Rückfallbetriebsart auf das Empfangen der zweiten Empfangssignale die Steuersignale bereitzustellen und an die Schalteinrichtung zu geben, derart, dass die Signalisierungseinrichtung der Hindernisbefeuerung für einen vorbestimmten Zeitraum eingeschaltet wird.

Mit dem ersten Steuerteilsystem kann in Kombination mit der Schalteinrichtung sowie der Signalisierungseinrichtung ein Fail-Safe-Befeuerungssystem gebildet ist. In einer Ausführungsform kann zwischen den beiden Systemen, also dem Sekundärradarsystem und dem Primärradars- / Funkempfängersystem, eine ODER-Verknüpfung ausgebildet sein. Dann reagiert das sekundäre System (Primärradars- / Funkempfängersystem), welches zwar einen geringeren Erfassungsbereich hat, aber unempfindlich gegenüber Störungen der Transponder in Luftfahrzeugen ist, in jedem Fall. Es erfolgt dann möglicherweise eine spätere oder zeitversetzte Warnung (Signalisierung), aber es wird wenigstens reagiert. Somit kann auf ein "Fail" beim aussendenden Transponder regiert werden, und das System ist "Safe".

Die erste und / oder die zweite Antenneneinrichtung können an einem Schaltschrankgehäuse eines der Windenergieanlage zugeordneten Schaltschranks angeordnet sind, in welchem die erste und die zweite Empfangseinrichtung aufgenommen sind. Alternativ kann zumindest die zweite Antenneneinrichtung außerhalb des Schaltschranks und wahlweise benachbart hierzu angeordnet werden.

Der Schaltschrank eingerichtet sein, im Außenbereich an einem Maschinenhaus der Windenergieanlage angeordnet zu werden. Die Ausgestaltung des Schaltschranks für die Nutzung im Außenbereich der Windenergieanlage am Maschinenhaus, welches auch als Gondel bezeichnet wird, ermöglicht es, Komponenten, Module oder Einheiten zum Betreiben der Hindernisbefeuerung losgelöst von dem inneren Aufbau des Maschinenhauses selbst anwendungsgerecht für den Betrieb bei unterschiedlich Einsatzbedingungen bereitzustellen. Im Unterschied zu bekannten Windenergieanlagen können die Komponenten, Module oder Einheiten zum Schalten der Hindernisbefeuerung so außerhalb des Innenraums der Windenergieanlage angeordnet werden. Im Maschinenhaus von Windenergieanlagen ist der Platz regelmäßig sehr begrenzt. Das Anordnen in dem Schaltschrank im Außenbereich der Windenergieanlage trägt somit dazu bei, im Maschinenhaus der Windenergieanlage Platz einzusparen oder für andere Komponenten oder Module der Windenergieanlage bereitzustellen. Auch entfällt so das Anordnen der Antenneneinrichtungen sowie der zugeordneten Empfangseinrichtungen sowie zugehöriger Kabel direkt am oder im Maschinenhaus, wodurch elektromagnetische Störfelder im Umfeld der im Maschinenhaus der Windenergieanlage üblicherweise angeordneten Generatoren, Transformatoren sowie Umrichter entfallen. Die Montage des Schaltschranks außerhalb am Maschinenhaus ermöglicht eine leichte Nachrüstung und Wartung der Schaltung der Hindernisbefeuerung.

In einer Ausgestaltung kann der Schaltschrank einer einzelnen Windenergieanlage zugeordnet sein, also (nur) Komponenten, Module oder Einheiten zum Schalten der Hindernisbefeuerung für die eine Windenergieanlage aufnehmen. Alternativ können in einem (gemeinsamen) Schaltschrank Komponenten, Module oder Einheiten zum Schalten der Hindernisbefeuerung für mehrere Windenergieanlagen angeordnet sein, zum Beispiel zwei oder drei unmittelbar benachbart zueinander angeordnete Windenergieanlagen.

Das Schaltschrankgehäuse kann ein Metallgehäuse sein.

Die Signalisierungseinrichtung der Hindernisbefeuerung der Windenergieanlage kann eine optische Signaleinrichtung aufweisen, die eingerichtet ist, optische Signale im sichtbaren Wellenlängenbereich abzugeben. Die Signalisierungseinrichtung der Hindernisbefeuerung der Windenergieanlage kann eine optische Signaleinrichtung aufweisen, die eingerichtet ist, optische Signale im nicht-sichtbaren Wellenlängenbereich abzugeben.

Das Übertragen der ersten Steuersignale von der ersten Steuereinrichtung an die Schalteinrichtung der Hindernisbefeuerung kann eine kabellose und / oder eine kabelgebundene Datenübertragung umfassen.

Die Transpondersignale (erste Empfangssignale) können Informationen zur Flughöhe und / oder Flugposition des Flugobjekts umfassen.

Die Steuereinrichtung kann in dem Schaltschrankgehäuse angeordnet sein.

Die Schalteinrichtung der Hindernisbefeuerung kann zumindest teilweise in dem Schaltschrankgehäuse gebildet sein. Die Schalteinrichtung der Hindernisbefeuerung kann ganz oder teilweise in dem Schaltschrankgehäuse angeordnet sein. Weist die Schalteinrichtung zum Schalten der Signalisierungseinrichtung der Hindernisbefeuerung mehrere Module oder Komponenten auf, können diese teilweise im Schaltschrankgehäuse und teilweise in der Windenergieanlage selbst angeordnet sein, insbesondere im Maschinenhaus. Das teilweise Ausbilden der Schalteinrichtung der Hindernisbefeuerung in dem Schaltschrankgehäuse mindert nicht Platzbedarf für die Elemente der Hindernisbefeuerung in der Windenergieanlage selbst.

Die Schalteinrichtung der Hindernisbefeuerung kann zumindest teilweise an der Windenergieanlage gebildet sein. Bei dieser Ausgestaltung ist die Schalteinrichtung der Hindernisbefeuerung ganz oder teilweise in der Windenergieanlage selbst angeordnet, beispielsweise im Maschinenhaus.

An dem Schaltschrankgehäuse kann eine gedichtete Kabelwanddurchführung gebildet sein. Eine Kabelführung zwischen den Antenneneinrichtungen, die im Außenbereich des Schaltschrankgehäuses angeordnet sein können, beispielsweise mittels Montage auf einer äußeren Oberfläche des Schaltschrankgehäuses, und der ersten Empfangseinrichtung sowie einer Transceivereinrichtung kann eine gedichtete Kabelwanddurchführung am Schaltschrankgehäuse umfassen, die beispielsweise unter Verwendung von Hohlschrauben oder dergleichen ausgeführt sein kann. Auf diese Weise werden die Kabel vom außen nach innen gedichtet geführt.

Vergleichbar kann am Maschinenhaus eine gedichtete Kabelwanddurchführung vorgesehen sein, um zum Beispiel Kabel aus dem Schaltschrank gedichtet ins Maschinenhaus einzuführen.

Eine kabelgebundene Verbindung, die durch die gedichtete Kabelwanddurchführung am Schaltschrankgehäuse hindurchzuführen ist, um die Elemente oder Komponenten, die im oder am Schaltschrank angeordnet sind, mit Komponenten oder Elementen in der Windenergieanlage selbst zu verbinden, kann auf höchstens zwei oder nur ein einziges Kabel beschränkt sein. Beispielsweise können eine Kabelverbindung zur Energieversorgung sowie eine Kabelverbindung für das Übertragen von Daten (Datenkabel) vorgesehen sein. Auf diese Weise können die Elemente oder Komponenten im Schaltschrank an die Energieversorgung der Windenergieanlage angeschlossen werden. Bei der Ausführung der Kabelverbindung mit nur einem einzigen Kabel können Energie und Daten über dieses Kabel übertragen werden. Für die Übertragung von Datensignalen kann zum Beispiel die Powerline-Technologie genutzt werden, welche das Übertragen von Datensignalen über Energieversorgungskabel ermöglicht.

Eine schaltschrankseitige Erdungseinrichtung kann mit einer Erdungseinrichtung der Windenergieanlage verbunden sein.

An dem Schaltschrankgehäuse kann außenseitig eine zweite (schalschrankseitige) Signalisierungseinrichtung der Hindernisbefeuerung der Windenergieanlage angeordnet sein. Die zweite Signalisierungseinrichtung der Hindernisbefeuerung der Windenergieanlage kann voneinander beabstandete Signaleinrichtungen aufweisen. Die voneinander beabstandeten Signaleinrichtungen können zum Beispiel in entgegengesetzten Endbereichen des Schaltschrankgehäuses an oder auf diesem angeordnet sein. Die Signaleinrichtungen können eingerichtet sein, optische Signale abzugeben, beispielsweise im nicht sichtbaren Wellenlängenbereich. So kann zum Beispiel eine Infrarotlicht abgebende Signaleinrichtung vorgesehen sein.

Antenneneinrichtungen können an dem Schaltschrankgehäuse in einem Bereich zwischen den beabstandeten Signaleinrichtungen angeordnet sein. Sind die voneinander beabstandeten Signaleinrichtungen zum Beispiel in gegenüberliegenden End- oder Eckbereichen des Schaltschrankgehäuses angeordnet, können die Antenneneinrichtungen hier zwischen im Bereich einer Deck- oder Dachfläche des Schaltschrankgehäuses angeordnet sein.

Eine erste Signalisierungseinrichtung und eine zweite Signalisierungseinrichtung der Hindernisbefeuerung der Windenergieanlage können unabhängig voneinander schaltbar sein Die beiden Signalisierungseinrichtungen, die der Hindernisbefeuerung der Windenergieanlagen zugeordnet sind, können auf diese Weise getrennt gesteuert werden, also insbesondere unabhängig voneinander ein- und ausgeschaltet werden. Hierbei kann vorgesehen sein, dass die zweite Signalisierungseinrichtung der Hindernisbefeuerung zu vorbestimmten Tageszeiten, beispielsweise nachts oder bei schlechter Sicht, dauerhaft eingeschaltet ist, um so die Windenergieanlage als Hindernis zu kennzeichnen
Die erste Signalisierungseinrichtung der Hindernisbefeuerung der Windenergieanlage kann eine optische Signaleinrichtung aufweisen, die eingerichtet ist, optische Signale im sichtbaren Wellenlängenbereich abzugeben. Hierbei kann vorgesehen sein, dass die Hindernisbefeuerung der Windenergieanlage ausschließlich mit der optischen Signaleinrichtung ausgestattet ist, die optische Signale im sichtbaren Wellenlängenbereich abgibt.

Die zweite Signalisierungseinrichtung der Hindernisbefeuerung der Windenergieanlage kann eine optische Signaleinrichtung aufweisen, die eingerichtet ist, optische Signale im nicht-sichtbaren Wellenlängenbereich abzugeben. Bei diesem Ausführungsbeispiel verfügt die Hindernisbefeuerung der Windenergieanlage über eine Signalisierung, bei der die optische Signaleinrichtung Signale im nichtsichtbaren Wellenlängenbereich abgibt, beispielsweise mittels Infrarotlichtsignalen.

Die zweite Signalisierungseinrichtung der Hindernisbefeuerung der Windenergieanlage kann unabhängig von der ersten Signalisierungseinrichtung der Hindernisbefeuerung der Windenergieanlage steuerbar sein und hierzu der zweiten Signalisierungseinrichtung zugeordnete Steuersignale empfangen. Hierfür kann eine zweite Steuereinrichtung vorgesehen sein, die wahlweise in dem Schaltschrankgehäuse aufgenommen ist und Steuersignale zum Ein- / Ausschalten zum Beispiel der optischen Signaleinrichtung der zweiten Signalisierungseinrichtung der Hindernisbefeuerung der Windenergieanlage bereitstellt.

In alternativen Ausgestaltungen können die erste und / oder die zweite Signalisierungseinrichtung, die unabhängig voneinander schaltbar sein können, Signaleinrichtungen, insbesondere optische Signaleinrichtungen, außen an dem Schaltschrankgehäuse selbst und / oder an anderer Stelle an der Windenergieanlage in deren Außenbereich aufweisen.

Die vorangehend im Zusammenhang mit der Anordnung zum Steuern der bedarfsgerechten Hindernisbefeuerung erläuterten Ausgestaltungen können in Verbindung mit der Windenergieanlage, die eine solche Anordnung aufweist, sowie dem Verfahren zum Steuern der bedarfsgerechten Hindernisbefeuerung entsprechend vorgesehen sein. Hierbei kann in einer Ausgestaltung der Schaltschrank am Maschinenhaus außenseitig montiert sein.

### Beschreibung von Ausführungsbeispielen

Im Folgenden werden weitere Ausführungsbeispiele unter Bezugnahme auf Figuren einer Zeichnung näher erläutert. Hierbei zeigen:
- Fig. 1: eine schematische Darstellung einer Anordnung mit einer Windenergieanlage und einem im Außenbereich der Windenergieanlage am Maschinenhaus angeordneten Schaltschrank;
- Fig. 2: eine schematische Darstellung eines Schaltschranks für den Außenbereich einer Windenergieanlage;
- Fig. 3: eine schematische Darstellung des Schaltschranks aus Fig. 2 mit hierin aufgenommenen Funktionskomponenten;
- Fig. 4: eine schematische Darstellung von Funktionskomponenten einer Windenergieanlage mit Hindernisbefeuerung;
- Fig. 5: eine schematische Darstellung für Funktionskomponenten für eine Hindernisbefeuerung der Windenergieanlage sowie des Schaltschranks und
- Fig. 6: eine schematische Darstellung einer anderen Ausführungsform für eine bedarfsgerechte Hindernisbefeuerung der Windenergieanlage.

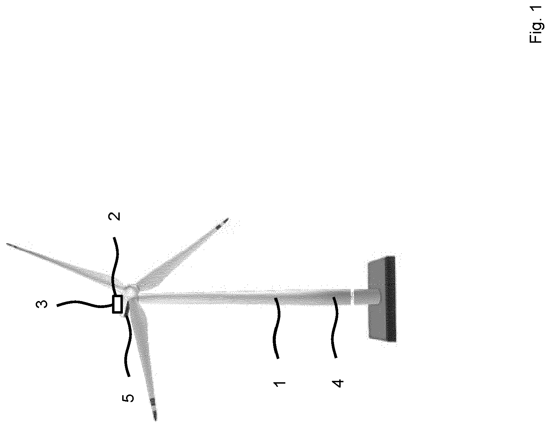

Fig. 1 zeigt eine schematische Darstellung einer Anordnung mit einer Windenergieanlage 1 und einem der Windenergieanlage 1 zugeordneten Schaltschrank 2 mit einem Schaltschrankgehäuse 3 im Außenbereich der Windenergieanlage 1. Der Schaltschrank 2 ist außerhalb der Windenergieanlage 1 angeordnet, also insbesondere getrennt von einem Turmgehäuse 4 und einem Maschinenhaus 5 der Windenergieanlage 1. Der Schaltschrank 2, welcher im gezeigten Ausführungsbeispiel außen am Maschinehaus 5 angeordnet ist, ermöglicht es, hierin Funktionskomponenten, -elemente oder -module einer Hindernisbefeuerung der Windenergieanlage 1 aufzunehmen, so dass Platzbedarf für diese Funktionskomponenten in der Windenergieanlage 1 selbst entfällt, insbesondere im Maschinenhaus 5.

In einer alternativen Ausführungsform kann der Schaltschrank 2 im Maschinenhaus 5 angeordnet sein.

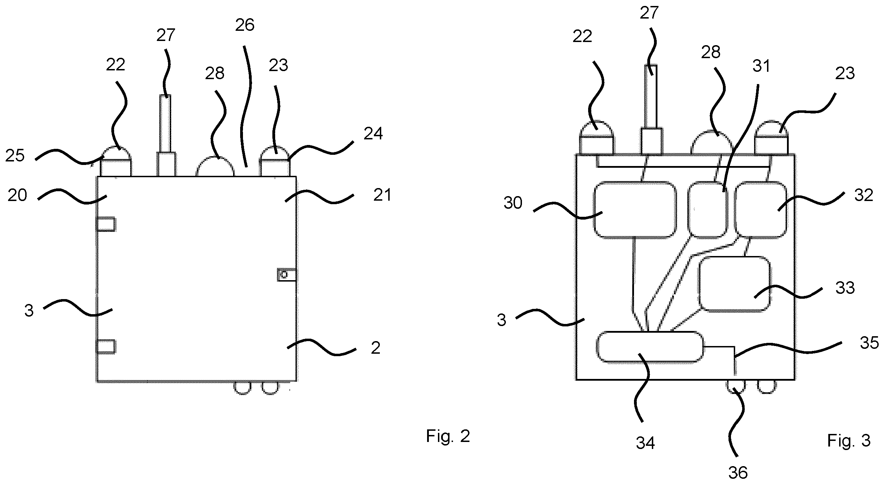

Die Fig. 2 und 3 zeigen schematische Darstellungen für Ausführungsformen des Schaltschranks 2. Gemäß Fig. 2 sind in gegenüberliegenden Eckbereichen 20, 21 des Schaltschrankgehäuses 3 optische Signaleinrichtungen 22, 23 einer Signalisierungseinrichtung 24 angeordnet. Die Signalisierungseinrichtung 24 ist Teil einer Hindernisbefeuerung 25 der Windenergieanlage 1. Es kann vorgesehen sein, dass die optischen Signaleinrichtungen 22, 23 jeweils Lichtsignale im nicht sichtbaren Wellenbereich abgeben, beispielsweise Infrarotlicht.

In einem Bereich 26 zwischen den optischen Signaleinrichtungen 22, 23 sind eine erste Antenneneinrichtung 27 sowie eine zweite Antenneneinrichtung 28 angeordnet. Die erste Antenneneinrichtung 27 ist konfiguriert, sogenannte Transpondersignale von Flugobjekten (Luftfahrzeugen, nicht dargestellt) zu empfangen. Derartige Transpondersignale werden von Luftfahrzeugen regelmäßig ausgesandt und können Höheninformationen betreffend eine aktuelle Flughöhe sowie Positionsinformation des Flugobjektes umfassen. Die erste Antenneneinrichtung 27 und / oder die zweite Antenneneinrichtung 28 können am Schaltschrankgehäuse 3 auch an einer Seitenwand angeordnet sein.

Die zweite Antenneneinrichtung 28 ist ausgebildet für eine Datenkommunikation, um elektronische Datensignale zu empfangen und zu senden.

Gemäß der schematischen Darstellung in Fig. 3 sind in dem Schaltschrankgehäuse 3 eine erste Empfangseinrichtung 30, die der ersten Antenneneinrichtung 27 zugeordnet ist, sowie eine Transceivereinrichtung 31 (Sende- / Empfangseinrichtung) aufgenommen, die der zweiten Antenneneinrichtung 28 zugeordnet ist. Mit Hilfe der ersten Empfangseinrichtung 30 werden über die erste Antenneneinrichtung 27 die Transpondersignale der Flugobjekte empfangen, insbesondere Transpondersignale mit Informationen zur Flughöhe. Die Transceivereinrichtung 31 ist eingerichtet, über die zweite Antenneneinrichtung 28 Signale zur Datenkommunikation zu senden und zu empfangen. Beispielsweise kann die Transceivereinrichtung 31 mit der zweiten Antenneneinrichtung 28 eingerichtet sein, Mobilfunksignale, WLAN-Signale und / oder GPS-Signale für eine Datenkommunikation zu empfangen und zu senden.

Gemäß dem Ausführungsbeispiel in Fig. 3 ist in dem Schaltschrankgehäuse 3 weiterhin eine erste Schalteinrichtung 32 angeordnet, die den optischen Signaleinrichtungen 22, 23 zugeordnet ist, um diese in Abhängigkeit von Steuersignalen, die von einer ersten Steuereinrichtung 33 zum Steuern der Hindernisbefeuerung der Windenergieanlage 1 empfangen werden, zu schalten, also ein- und auszuschalten.

Bei dem Ausführungsbeispiel in Fig. 3 ist eine Schnittstelleneinrichtung 34 im Schaltschrank 3 vorgesehen, um zu übertragende Datensignale über ein Datenkabel 35 zu senden und zu empfangen. Das Datenkabel 35 ist über eine dichtende Kabelwanddurchführung 36 aus dem Schaltschrankgehäuse 3 herausgeführt, um mit Elementen oder Komponenten der Windenergieanlage 1 verbunden zu werden, die an oder in der Windenergieanlage 1 angeordnet sind. Alternativ oder ergänzend kann über die dichtende Kabelwanddurchführung 36 ein Energieversorgungskabel geführt sein, um eine Energieversorgung der Komponenten oder Elemente in dem Schaltschrank 2 über einen Anschluss an der Windenergieanlage 1 zu versorgen.

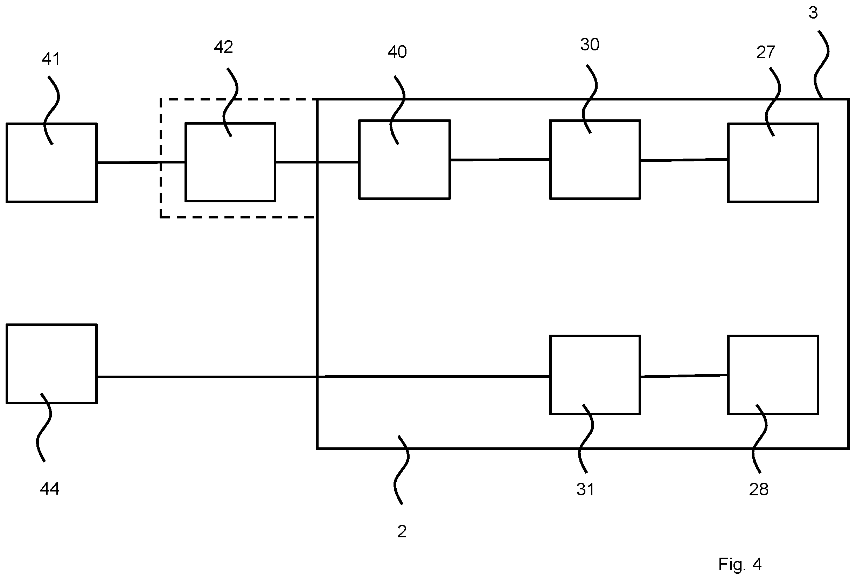

Fig. 4 zeigt eine schematische Darstellung von Funktionskomponenten für eine Hindernisbefeuerung der Windenergieanlage 1 sowie die Datenkommunikation. Dieses Ausführungsbeispiel ist mit den vorangehend erläuterten Ausgestaltungen oder Komponenten oder Aspekten davon kombinierbar.

Gemäß Fig. 4 ist die erste Antenneneinrichtung 27, die eingerichtet ist, Transpondersignale von Flugobjekten zu empfangen, mit der ersten Empfangseinrichtung 30 verbunden, die ihrerseits mit einer Steuereinrichtung 40 in Verbindung steht. Die Steuereinrichtung 40 ist eingerichtet, die empfangenen Transpondersignale zu verarbeiten und in Abhängigkeit hiervon Steuersignale für eine Signalisierungseinrichtung 41 der Hindernisbefeuerung der Windenergieanlage 1 bereitzustellen. Die Signalisierungseinrichtung 41 kann außen an verschiedenen Elementen der Windenergieanlage 1 gebildet sein, zum Beispiel am Maschinenhaus 5 und / oder am Schaltschrankgehäuse 3. Die Steuersignale werden in einer Schalteinrichtung 42 verarbeitet, um die Signalisierungseinrichtung 41 den Steuersignalen entsprechend zu schalten. Auf diese Weise wird die Signalisierungseinrichtung 41 der Hindernisbefeuerung der Windenergieanlage 1 in Abhängigkeit von den Transpondersignalen gesteuert. Die Signalisierungseinrichtung 41 kann eingerichtet sein, optische Signale im sichtbaren und / oder nichtsichtbaren Wellenlängenbereich abzugeben.

Gemäß Fig. 4 ist die zweite Antenneneinrichtung 28 mit der Transceivereinrichtung 31 verbunden, welche ihrerseits mit einer Steuereinrichtung 44 verbunden ist, wahlweise auch mit der Steuereinrichtung 40. Über die Transceivereinrichtung 31 und die zweite Antenneneinrichtung 28 kann eine Fernüberwachungseinheit Daten mit der Steuereinrichtung 44 und / oder der Steuereinrichtung 40 austauschen, und somit zum Beispiel aus der ferne Befehle zum Ein- und Ausschalten übermitteln oder regelmäßig Statusinformationen an eine Fernüberwachungseinheit übersenden.

Gemäß der schematischen Darstellung in Fig. 4 sind die erste Empfangseinrichtung 30 sowie die zugeordnete erste Antenneneinrichtung 27 und die Transceivereinrichtung 31 sowie die zugeordnete zweite Antenneneinrichtung 28 in oder an dem Schaltschrankgehäuse 3 im Außenbereich der Windenergieanlage 1 angeordnet. Bei dem gezeigten Ausführungsbeispiel ist auch die Steuereinrichtung 40 in dem Schaltschrankgehäuse 3 aufgenommen. Wahlweise kann die Schalteinrichtung 42 ganz oder teilweise in dem Schaltschrankgehäuse 3 oder der Windenergieanlage 1 selbst aufgenommen sein.

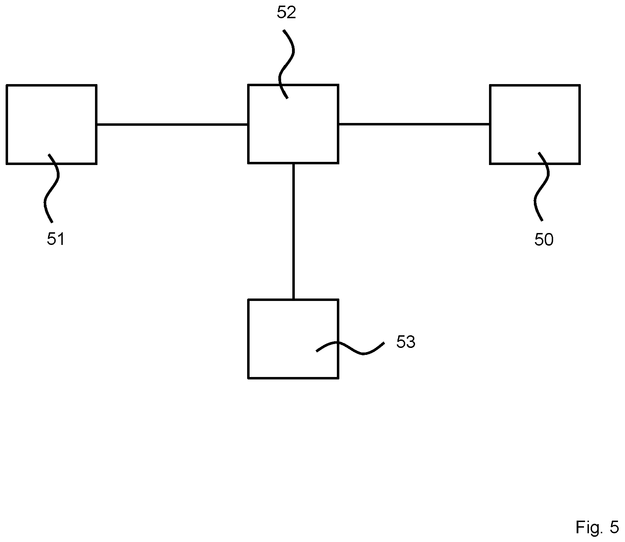

Fig. 5 zeigt eine schematische Darstellung einer weiteren Ausführung, die eine (erste) schaltschrankseitige Signalisierungseinrichtung 50 am Schaltschrankgehäuse 3 sowie eine (zweite) anlagenseitige Signalisierungseinrichtung 51 an der Windenergieanlage 1 aufweist und die mit den vorangehend erläuterten Ausführungsbeispielen oder Komponenten oder Aspekten davon kombinierbar ist. Den Signalisierungseinrichtungen 50, 51, die in dem Ausführungsbeispiel gemeinsam Teil der Befeuerung der Windenergieanlage 1 sind, ist eine Schalteinrichtung 52 zugeordnet, mit der die Signalisierungseinrichtungen 50, 51 gemeinsam oder getrennt geschaltet werden. Hierzu empfängt die Schalteinrichtung 52 Steuersignale von einer Steuereinrichtung 53 der Hindernisbefeuerung. Die Signalisierungseinrichtungen 50, 51 können eingerichtet sein, optische Signale zur Kennzeichnung abzugeben, seine es optische Signale im nichtsichtbaren Wellenlängenbereich, zum Beispiel Infrarotlicht, und / oder im sichtbaren Wellenlängenbereich. Teil der schaltschrankseitigen Signalisierungseinrichtung 50 können die Signaleinrichtungen 22, 23 auf oder an dem Schaltschrankgehäuse 3 sein (vgl. Fig. 3).

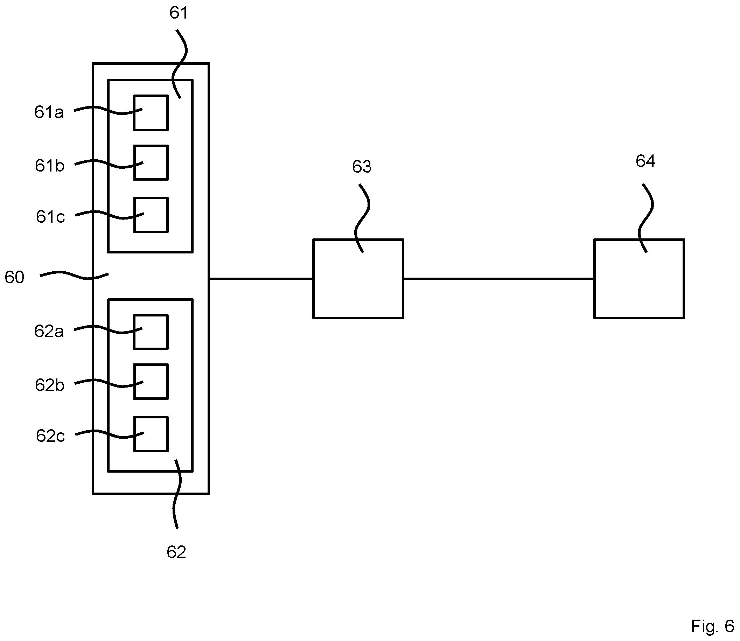

Fig. 6 zeigt eine schematische Darstellung einer anderen Ausführungsform für eine bedarfsgesteuerte Hindernisbefeuerung der Windenergieanlage 1, die mit den vorangehend erläuterten Ausführungsbeispielen oder Komponenten oder Aspekten davon kombinierbar ist. Hierbei ist vorgesehen, in einer Steuereinrichtung 60 der Hindernisbefeuerung ein erstes und ein zweites Steuerteilsystem 61, 62 bereitzustellen. Die Steuereinrichtung 60 ist mit einer Schalteinrichtung 63 verbunden, die ihrerseits mit einer Signalisierungseinrichtung 64 verbunden ist, um diese in Abhängigkeit von Steuersignalen zu schalten, die von der Steuereinrichtung 60 betriebsabhängig empfangen werden.

Das erste Steuerteilsystem 61 weist ein Sekundärradarsystem 61a, eine erste Antenneneinrichtung 61b zum Empfangen der Transpondersignale und eine erste Empfangseinrichtung 61c auf, die der ersten Antenneneinrichtung 61b zugeordnet und eingerichtet ist, über die erste Antenneneinrichtung 61b als erste Empfangssignale Transpondersignale von Flugobjekten zu empfangen.

Das zweite Steuerteilsystem 62, welches von dem ersten Steuerteilsystem 61 verschieden ist, weist mindestens Primärradarsystem oder mindestens ein Funkempfängersystem 62a, eine zweite Antenneneinrichtung 62b zum Empfangen der Primärradar- und / oder Funksignale und eine zweite Empfangseinrichtung 62c auf, die der zweiten Antenneneinrichtung 62b zugeordnet und eingerichtet ist, über die zweite Antenneneinrichtung 62b als zweite Empfangssignale Primärradar- und / oder Funksignale der Flugobjekte zu empfangen.

Die Windenergieanlage 1 ist so zusätzlich mit einem Primärradarsystem / Funkempfängersystem ausgestattet ist, um eine zusätzliche Absicherung (Rückfallebene) für die Steuerung der Hindernisbefeuerung der Windenergieanlage 1 bereitzustellen, zum Beispiel für den Fall, dass die vorangehend erläuterte bedarfsgerechte Steuerung auf Basis der empfangenen Transpondersignale von den Flugobjekten versagt oder gestört ist, zum Beispiel bei Ausfall des Transpondersignals. Aber auch ein paralleler Betrieb der Steuerung basierend auf den Transpondersignalen und Primärradarsystem / Funkempfängersystem zum Kennzeichnen der Windenergieanlage 1 kann vorgesehen sein. Das Primärradarsystem ist der (einzelnen) Windenergieanlage 1 zugeordnet und benachbart zu dieser in deren Außenbereich angeordnet.

Die Steuereinrichtung 60 eingerichtet ist, in einer Normalbetriebsart, wenn zumindest die ersten Empfangssignale in der Steuereinrichtung mittels des ersten Steuerteilsystem 61 empfangen werden, die Steuersignale in Abhängigkeit von zumindest den ersten Empfangssignalen bereitzustellen und an die Schalteinrichtung 63 zu geben. In der Normalbetriebsart können parallel und ergänzend zu den ersten Empfangssignalen (Transpondersignale) die zweiten Empfangssignale (Primärradar- und / oder Funksignale) empfangen werden und in der Steuereinrichtung 60 zum Steuern der Signalisierungseinrichtung 64 ausgewertet werden. In einer Rückfallbetriebsart, wenn (nur) die zweiten Empfangssignale nicht aber die ersten Empfangssignale in der Steuereinrichtung 60 empfangen werden, stellt die Steuereinrichtung 60 die Steuersignale in Abhängigkeit von den zweiten Empfangssignalen bereit und gibt diese an die Schalteinrichtung 63. Die Hindernisbefeuerung wird dann allein auf Basis der zweiten Empfangssignale (Primärradar- und / oder Funksignale) gesteuerte, da die ersten Empfangssignale (Transpondersignale) nicht empfangen werden, zum Beispiel wegen einer Störung. Im Fall eines aktiven Primärradarsystems erfolgt dem Empfang der zweiten Empfangssignale auf das vorherige Aussenden von Sendesignalen.

Es kann vorgesehen sein, das Primärradarsystem / Funkempfängersystem nicht an einem zentralen Ort zu installieren und die empfangenen Daten über Netzwerke zu verteilen, sondern in direkter Nähe zur ersten Antenneneinrichtung 61b des transponderbasierten Systems (erstes Steuerteilsystem 61) installiert, um die Daten dieses Systems durch eine Rückfallebene zu unterstützen.

Die Steuerung der Hindernisbefeuerung der Windenergieanlage 1 in Abhängigkeit von den Transpondersignalen bildet ein primäres System. Ein sekundäres System (Rückfallebene) wird bei dem Ausführungsbeispiel von dem Primärradarsystem / Funkempfängersystem gebildet sein. Beide Systeme können gleichzeitig betrieben werden, um die Aufgabe der sicheren und bedarfsgerechten Hindernisbefeuerung zu optimieren. Wenn das primäre System ausfällt, kann ein Fail-Safe-Status eingenommen werden. Wenn das sekundäre System ausfällt, ist dies nicht zwingend erforderlich.

Eine funktionstechnische Verknüpfung der beiden Systeme, also des ersten und des zweiten Steuerteilsystems 61, 62, kann in der Steuereinrichtung 60 als eine "ODER"-Verknüpfung realisiert sein, derart, dass das primäre System keine Kenntnis davon hat, in welchem Zustand sich das sekundäre System befindet. Dies ermöglicht es, das primäre System einer Baumusterprüfung zu unterziehen und dann wahlweise alleinstehend oder mit dem sekundären System zu betreiben.

Es handelt sich bei dem Primärradarsystem des zweiten Steuerteilsystems 62 nicht um ein vollwertiges BNK-System (BNK - bedarfsgesteuerte Nachtkennzeichnung), welches auch alleinstehend eine Baumusterprüfung erhalten könnte, sondern um ein vereinfachtes System. Das Primärradarsystem kann zum Beispiel einem maritimen Schiffsradar entsprechend ausgeführt sein, welches nur in einem geringen vertikalen Winkel rundum vorausschaut. Das Primärradarsystem kann in einer Ausführungsform einen vertikalen Öffnungswinkel von höchstens etwa 30° aufweist und eine Reichweite von höchstens etwa 25 km gegen ein Radarziel mit einem Radarquerschnitt von mindestens etwa 1 qm aufweisen.

Das Primärradarsystem des zweiten Steuerteilsystems 62 würde bei einem Transponderausfall und einem hiermit verbundenen Wegfall der ersten Empfangssignale in dem ersten Steuerteilsystem 61 ein sehr nahes Luftfahrzeug, welches sich auf Kollisionskurs zu Windenergieanlage 1 befindet, mittels Aktivieren der Hindernisbefeuerung warnen. In vielen Fällen könnte die Kollision dadurch verhindert werden.

Das primäre und das sekundäre System bilden zusammen mit der Schalteinrichtung 63 und der Signalisierungseinrichtung 64 eine Hindernisbefeuerung der Windenergieanlage 1. Nur das primäre System erfüllt alle Anforderungen an eine sichere Luftraumüberwachung, allerdings abhängig vom Betrieb externer, nicht überwachbarer Komponenten (zum Beispiel dem Sender für Transpondersignale). Das sekundäre System erfüllt hingegen nur reduzierte Anforderungen an eine sichere Luftraumüberwachung und ist auf eine "Warnung im letzten Moment" abgestimmt. Die beiden Systeme können unmittelbar nebeneinander und in unmittelbarer räumlicher Nähe zu dem abzusichernden Luftfahrthindernis installiert sein.

Das sekundäre System (Rückfallebene) kann alternativ zur Ausführung als Primärradar mit einem Funkempfänger gebildet sein, welcher passiv Notfallfrequenzen im Flugfunk mithört. Sobald sich auf diesen Bändern ein Signal, ggf. unter Berücksichtigung der Signalstärke, empfangen lässt, würde die Befeuerung der Windenergieanlage 1 für einen definierten Zeitraum aktiviert. Dies berücksichtigt, dass der von einem ausgefallenen Transponder betroffene Pilot eines Luftfahrzeugs dies bemerkt und über diese Notfallfrequenzen kommuniziert oder nur zu diesem Zweck einen entsprechenden Funkspruch absetzt. Weiterhin wäre es nützlich, wenn bei jedwedem Notfall-Funkverkehr die Befeuerung von Windenergieanlage in einer bestimmten Region aktiviert wird.

Alternativ oder ergänzend zu den Notfallfrequenzen können auch andere Frequenzen, die keine Notfallfrequenzen sind, zu gleichem Zweck genutzt werden. So kann hierbei vorgesehen sein, eine Zuordnung zwischen Luftfahrthindernis und Frequenz herzustellen, wie dies als solches beim Luftverkehr zum Einsatz kommt, zum Beispiel bei abgelegenen Landeplätzen.

Die Steuerung der Hindernisbefeuerung mittels Funkempfänger kann auch ergänzend zum Primärradar für das sekundäre System (Rückfallebene) zum Einsatz kommen.

Es kann vorgesehen sein, mittels der Steuereinrichtung 60 die schaltschrankseitige Signalisierungseinrichtung 50 am Schaltschrankgehäuse 3 sowie die anlagenseitige Signalisierungseinrichtung 51 an der Windenergieanlage 1 zu steuern.

Die in der vorstehenden Beschreibung, den Ansprüchen sowie der Zeichnung offenbarten Merkmale können sowohl einzeln als auch in beliebiger Kombination für die Verwirklichung der verschiedenen Ausführungen von Bedeutung sein.

## Patentansprüche

1. Anordnung zum Steuern einer bedarfsgerechten Hindernisbefeuerung einer Windenergieanlage (1), mit
- einer Signalisierungseinrichtung (64), die eingerichtet ist, Steuersignalen entsprechend optische Signale abzugeben;
- einer Schalteinrichtung (63), die mit der Signalisierungseinrichtung (64) verbunden und eingerichtet ist, die Signalisierungseinrichtung (64) zum Abgeben der optischen Signale den Steuersignalen entsprechend zu schalten; und
- einer Steuereinrichtung (60), aufweisend
- ein erstes Steuerteilsystem (61) mit
- einem Sekundärradarsystem (61a);
- einer ersten Antenneneinrichtung (61b) und
- einer ersten Empfangseinrichtung (61c), die der ersten Antenneneinrichtung (61a) zugeordnet und eingerichtet ist, über die erste Antenneneinrichtung (61a) als erste Empfangssignale Transpondersignale von Flugobjekten zu empfangen; und
- ein zweites Steuerteilsystem (62), welches von dem ersten Steuerteilsystem (61) verschieden ist, mit
- mindestens einem der folgenden Systeme (62a): Primärradarsystem und Funkempfängersystem;
- einer zweiten Antenneneinrichtung (62b) und
- einer zweiten Empfangseinrichtung (62c), die der zweiten Antenneneinrichtung (62b) zugeordnet und eingerichtet ist, über die zweite Antenneneinrichtung (62b) als zweite Empfangssignale Primärradar- und / oder Funksignale der Flugobjekte zu empfangen; und
wobei die Steuereinrichtung (60) eingerichtet ist,
- in einer Normalbetriebsart, wenn zumindest die ersten Empfangssignale empfangen werden, die Steuersignale in Abhängigkeit von zumindest den ersten Empfangssignalen bereitzustellen und an die Schalteinrichtung (63) zu geben; und
- in einer Rückfallbetriebsart, wenn die zweiten Empfangssignale nicht aber die ersten Empfangssignale empfangen werden, die Steuersignale in Abhängigkeit von den zweiten Empfangssignalen bereitzustellen und an die Schalteinrichtung (63) zu geben.

2. Anordnung nach Anspruch 1, **dadurch gekennzeichnet, dass** das Primärradarsystem mit mindestens einem der folgenden Radarsysteme gebildet ist: Aktivradarsystem und Passivradarsystem.

3. Anordnung nach Anspruch 1 oder 2, **dadurch gekennzeichnet, dass** eine von der zweiten Antenneneinrichtung (62b) umfasste Primärradarantenne des Primärradarsystems einen vertikalen Öffnungswinkel von höchstens etwa 30 Grad aufweist.

4. Anordnung nach mindestens einem der vorangehenden Ansprüche, **dadurch gekennzeichnet, dass** die Primärradarantenne des Primärradarsystems eine Antennenreichweite von höchstens etwa 25 km aufweist.

5. Anordnung nach mindestens einem der vorangehenden Ansprüche, **dadurch gekennzeichnet, dass** die Primärradarantenne des Primärradarsystems eingerichtet ist, Objekte mit einem Radarquerschnitt von wenigstens etwa 1 qm zu erkennen.

6. Anordnung nach mindestens einem der vorangehenden Ansprüche, **dadurch gekennzeichnet, dass** das zweite Steuerteilsystem (62) mit dem Funkempfängersystem eingerichtet ist, die zweiten Empfangssignale Notfall-Funksignale umfassend zu empfangen, die auf Notfallfunkfrequenzen übertragen werden.

7. Anordnung nach mindestens einem der vorangehenden Ansprüche, **dadurch gekennzeichnet, dass** die Steuereinrichtung (60) eingerichtet ist, in der Rückfallbetriebsart auf das Empfangen der zweiten Empfangssignale die Steuersignale bereitzustellen und an die Schalteinrichtung (63) zu geben, derart, dass die Signalisierungseinrichtung (64) der Hindernisbefeuerung für einen vorbestimmten Zeitraum eingeschaltet wird.

8. Anordnung nach mindestens einem der vorangehenden Ansprüche, **dadurch gekennzeichnet, dass** mit dem ersten Steuerteilsystem (61) in Kombination mit der Schalteinrichtung sowie der Signalisierungseinrichtung (64) ein Fail-Safe-Befeuerungssystem gebildet ist.

9. Anordnung nach mindestens einem der vorangehenden Ansprüche, **dadurch gekennzeichnet, dass** die erste und die zweite Antenneneinrichtung (61b, 62b) an einem Schaltschrankgehäuse (3) eines der Windenergieanlage (1) zugeordneten Schaltschranks angeordnet sind, in welchem die erste und die zweite Empfangseinrichtung (61c, 62c) aufgenommen sind.

10. Anordnung nach Anspruch 9, dadurch **gekennzeichne**t, dass der Schaltschrank (3) eingerichtet ist, im Außenbereich an einem Maschinenhaus (5) der Windenergieanlage (1) angeordnet zu werden.

11. Anordnung nach mindestens einem der vorangehenden Ansprüche, **dadurch gekennzeichnet, dass** die Signalisierungseinrichtung (64) der Hindernisbefeuerung der Windenergieanlage (1) eine optische Signaleinrichtung aufweist, die eingerichtet ist, optische Signale im sichtbaren Wellenlängenbereich abzugeben.

12. Anordnung nach mindestens einem der vorangehenden Ansprüche, **dadurch gekennzeichnet, dass** die Signalisierungseinrichtung (64) der Hindernisbefeuerung der Windenergieanlage (1) eine optische Signaleinrichtung aufweist, die eingerichtet ist, optische Signale im nicht-sichtbaren Wellenlängenbereich abzugeben.

13. Windenergieanlage (1) mit einer Anordnung nach mindestens einem der vorangehenden Ansprüche.

14. Verfahren zum Steuern einer bedarfsgerechten Hindernisbefeuerung einer Windenergieanlage (1), aufweisend
- eine Signalisierungseinrichtung (64), die eingerichtet ist, Steuersignalen entsprechend optische Signale abzugeben;
- eine Schalteinrichtung, die mit der Signalisierungseinrichtung (64) verbunden und eingerichtet ist, die Signalisierungseinrichtung (64) zum Abgeben der optischen Signale den Steuersignalen entsprechend zu schalten; und
- eine Steuereinrichtung (60), aufweisend
- ein erstes Steuerteilsystem (61) mit
- einem Sekundärradarsystem (61a);
- einer ersten Antenneneinrichtung (61b) und
- einer ersten Empfangseinrichtung (61c), die der ersten Antenneneinrichtung (61b) zugeordnet und eingerichtet ist, über die erste Antenneneinrichtung (61b) als erste Empfangssignale Transpondersignale von Flugobjekten zu empfangen; und
- ein zweites Steuerteilsystem (62), welches von dem ersten Steuerteilsystem (61) verschieden ist, mit
- mindestens einem der folgenden Systeme (62a): Primärradarsystem und Funkempfängersystem;
- einer zweiten Antenneneinrichtung (62b) und
- einer zweiten Empfangseinrichtung (62c), die der zweiten Antenneneinrichtung (62b) zugeordnet und eingerichtet ist, über die zweite Antenneneinrichtung (62b) als zweite Empfangssignale Primärradar- und / oder Funksignale der Flugobjekte zu empfangen; und
wobei bei dem Verfahren
- die Steuereinrichtung (6)
- in einer Normalbetriebsart, wenn zumindest die ersten Empfangssignale empfangen werden, die Steuersignale in Abhängigkeit von zumindest den ersten Empfangssignalen bereitstellt und an die Schalteinrichtung (63) gibt; und
- in einer Rückfallbetriebsart, wenn die zweiten Empfangssignale nicht aber die ersten Empfangssignale empfangen werden, die Steuersignale in Abhängigkeit von den zweiten Empfangssignalen bereitstellt und an die Schalteinrichtung (63) gibt; und
- die Schalteinrichtung (63) die Signalisierungseinrichtung (64) in der Normalbetriebsart und in der Rückfallbetriebsart den jeweiligen Steuersignalen entsprechend schaltet.

## Claims

1. Arrangement for controlling an obstruction lighting of a wind turbine (1) according to demand, comprising
- a signaling device (64) which is configured to emit optical signals in accordance with control signals;
- a switching device (63) which is connected to the signaling device (64) and is configured to switch the signaling device (64) in order to emit the optical signals in accordance with the control signals; and
- a control device (60), comprising
- a first control subsystem (61) with
- a secondary radar system (61a);
- a first antenna device (61b) and
- a first receiving device (61c) which is assigned to the first antenna device (61a) and is configured to receive transponder signals from flying objects via the first antenna device (61a) as first received signals; and
- a second control subsystem (62) which is different from the first control subsystem (61), with
- at least one of the following systems (62a): primary radar system and radio receiver system;
- a second antenna device (62b) and
- a second receiving device (62c) which is assigned to the second antenna device (62b) and is configured to receive primary radar and/or radio signals from the flying objects via the second antenna device (62b) as second received signals; and
wherein the control device (60) is configured
- in a normal operating mode, if at least the first received signals are received, to provide the control signals depending on at least the first received signals and to pass them to the switching device (63); and
- in a fallback operating mode, if the second received signals are not received but the first received signals are received, to provide the control signals depending on the second received signals and to pass them to the switching device (63).

2. The arrangement according to claim 1, **characterized in that** the primary radar system is provided with at least one of the following radar systems: active radar system and passive radar system.

3. The arrangement according to claim 1 or 2, **characterized in that** a primary radar antenna of the primary radar system comprised by the second antenna device (62b) has a vertical opening angle of at most approximately 30 degrees.

4. The arrangement according to at least one of the preceding claims, **characterized in that** the primary radar antenna of the primary radar system has an antenna range of at most approximately 25 km.

5. The arrangement according to at least one of the preceding claims, **characterized in that** the primary radar antenna of the primary radar system is configured to detect objects having a radar cross section of at least approximately 1 qm.

6. The arrangement according to at least one of the preceding claims, **characterized in that** the second control subsystem (62) with the radio receiver system is configured to receive the second received signals comprising emergency radio signals which are transmitted on emergency radio frequencies.

7. The arrangement according to at least one of the preceding claims, **characterized in that** the control device (60) is configured, in the fallback operating mode, to provide the control signals following the reception of the second received signals and to pass them to the switching device (63) in such a way that the signaling device (64) of the obstruction lighting is switched on for a predetermined period of time.

8. The arrangement according to at least one of the preceding claims, **characterized in that** a fail-safe beacon system is provided with the first control subsystem (61) in combination with the switching device and the signaling device (64).

9. The arrangement according to at least one of the preceding claims, **characterized in that** the first and the second antenna device (61b, 62b) are arranged on a switch cabinet housing (3) of a switch cabinet which is assigned to the wind turbine (1) and in which the first and the second receiving device (61c, 62c) are accommodated.

10. The arrangement according to claim 9, **characterized in that** the switch cabinet (3) is configured to be arranged in the outer region on a nacelle (5) of the wind turbine (1).

11. The arrangement according to at least one of the preceding claims, **characterized in that** the signaling device (64) of the obstruction lighting of the wind turbine (1) has an optical signaling device which is configured to emit optical signals in the visible wavelength range.

12. The arrangement according to at least one of the preceding claims, **characterized in that** the signaling device (64) of the obstruction lighting of the wind turbine (1) has an optical signaling device which is configured to emit optical signals in the non-visible wavelength range.

13. A wind turbine (1) comprising an arrangement according to at least one of the preceding claims.

14. A method for controlling an obstruction lighting of a wind turbine (1) according to demand, comprising
- a signaling device (64) which is configured to emit optical signals in accordance with control signals;
- a switching device which is connected to the signaling device (64) and is configured to switch the signaling device (64) in order to emit the optical signals in accordance with the control signals; and
- a control device (60), comprising
- a first control subsystem (61) with
- a secondary radar system (61a);
- a first antenna device (61b) and
- a first receiving device (61c) which is assigned to the first antenna device (61b) and is configured to receive transponder signals from flying objects via the first antenna device (61b) as first received signals; and
- a second control subsystem (62) which is different from the first control subsystem (61), with
- at least one of the following systems (62a): primary radar system and radio receiver system;
- a second antenna device (62b) and
- a second receiving device (62c) which is assigned to the second antenna device (62b) and is configured to receive primary radar and/or radio signals from the flying objects via the second antenna device (62b) as second received signals; and
wherein in the method
- the control device (6)
- in a normal operating mode, if at least the first received signals are received, provides the control signals depending on at least the first received signals and passes them to the switching device (63); and
- in a fallback operating mode, if the second received signals are not received but the first received signals are received, provides the control signals depending on the second received signals and passes them to the switching device (63); and
- the switching device (63) switches the signaling device (64) in accordance with the respective control signals in the normal operating mode and in the fallback operating mode.

## Revendications

1. Agencement permettant de commander un balisage d'obstacle approprié d'une installation éolienne (1), avec
- un système de signalisation (64), qui est agencé pour émettre des signaux optiques correspondant à des signaux de commande,
- un système de commutation (63), qui est relié au système de signalisation (64) et est agencé pour brancher le système de signalisation (64) pour émettre des signaux optiques correspondant aux signaux de commande, et
- un système de commande (60), comportant
- un premier système partiel de commande (61) avec
- un système de radar secondaire (61a),
- un premier système d'antenne (61b), et
- un premier système de réception (61c), qui est attribué au premier système d'antenne (61a) et est agencé pour recevoir par le premier système d'antenne (61a) des signaux de transpondeurs des objets volants en tant que premiers signaux de réception, et
- un deuxième système partiel de commande (62), lequel est différent du premier système partiel de commande (61), avec
- au moins un des systèmes suivants (62a) : système de radar primaire et système de réception radio,
- un deuxième système d'antenne (62b), et
- un deuxième système de réception (62c), qui est attribué au deuxième système d'antenne (62b) et est agencé pour recevoir par le deuxième système d'antenne (62b) des signaux de radar primaire et/ou des signaux radio des objets volants en tant que deuxièmes signaux de réception, et
sachant que le système de commande (60) est agencé,
- dans un type de fonctionnement normal, lorsqu'au moins les premiers signaux de réception sont reçus, pour fournir les signaux de commande en fonction d'au moins les premiers signaux de réception et les transmettre au système de commutation (63), et
- dans un type de fonctionnement de rechute, lorsque les deuxièmes signaux de réception sont reçus mais pas les premiers signaux de réception, fournir les signaux de commande en fonction des deuxièmes signaux de réception et les transmettre au système de commutation (63).

2. Agencement selon la revendication 1, **caractérisé en ce que** le système de radar primaire est formé avec au moins un des systèmes de radar suivants : système de radar actif et système de radar passif.

3. Agencement selon la revendication 1 ou 2, **caractérisé en ce qu'**une antenne de radar primaire entourée par le deuxième système d'antenne (62b) comporte un angle d'ouverture vertical d'un maximum d'environ 30 degrés.

4. Agencement selon au moins l'une quelconque des revendications précédentes, **caractérisé en ce que** l'antenne de radar primaire du système de radar primaire comporte une portée d'antenne d'un maximum de 25 km.

5. Agencement selon au moins l'une quelconque des revendications précédentes, **caractérisé en ce que** l'antenne de radar primaire du système de radar primaire est agencée pour identifier des objets avec une section radar d'au moins environ 1 m².

6. Agencement selon au moins l'une quelconque des revendications précédentes, **caractérisé en ce que** le deuxième système partiel de commande (62) avec le système de réception radio est agencé pour réceptionner les deuxièmes signaux de réception comprenant les signaux radio de secours, qui sont transmis sur des fréquences radio de secours.

7. Agencement selon au moins l'une quelconque des revendications précédentes, **caractérisé en ce que** le système de commande (60) est agencé pour fournir les signaux de commande dans le type de fonctionnement de rechute à la réception des deuxièmes signaux de réception et les transmettre au système de commutation (63) de telle manière que le système de signalisation (64) du balisage d'obstacle est mis en marche pour une période de temps prédéterminée.

8. Agencement selon au moins l'une quelconque des revendications précédentes, **caractérisé en ce qu'**un système de balisage à sécurité intégrée est formé avec le premier système partiel de commande (61) en combinaison avec le système de commutation ainsi qu'avec le système de signalisation (64).

9. Agencement selon au moins l'une quelconque des revendications précédentes, **caractérisé en ce que** le premier et le deuxième système d'antenne (61b 62b) sont disposés sur une enceinte d'armoire de commande (3) d'une armoire de commande attribuée à l'installation éolienne (1) dans laquelle sont logés le premier et le deuxième système de réception (61c, 62c).

10. Agencement selon la revendication 9, **caractérisé en ce que** l'armoire de commande (3) est agencée pour être disposée dans une zone extérieure sur une nacelle (5) de l'installation éolienne (1).

11. Agencement selon au moins l'une quelconque des revendications précédentes, **caractérisé en ce que** le système de signalisation (64) du balisage d'obstacle de l'installation éolienne (1) comporte un système de signalisation optique, qui est agencé pour émettre des signaux optiques dans une gamme de longueurs d'ondes visible.

12. Agencement selon au moins l'une quelconque des revendications précédentes, **caractérisé en ce que** le système de signalisation (64) du balisage d'obstacle de l'installation éolienne (1) comporte un système de signalisation optique, qui est agencé pour émettre des signaux optiques dans une gamme de longueurs d'ondes non visible.

13. Installation éolienne (1) avec un agencement selon au moins l'une quelconque des revendications précédentes.

14. Procédé permettant de commander un balisage d'obstacle approprié d'une installation éolienne (1), comportant
- un système de signalisation (64), qui est agencé pour émettre des signaux optiques correspondant à des signaux de commande,
- un système de commutation, qui est relié au système de signalisation (64) et est agencé pour brancher le système de signalisation (64) pour émettre des signaux optiques correspondant aux signaux de commande et
- un système de commande (60), comportant
- un premier système partiel de commande (61) avec
- un système de radar secondaire (61a),
- un premier système d'antenne (61b), et
- un premier système de réception (61c), qui est attribué au premier système d'antenne (61b) et est agencé pour recevoir par le premier système d'antenne (61b) des signaux de transpondeurs des objets volants en tant que premiers signaux de réception, et
- un deuxième système partiel de commande (62), lequel est différent du premier système partiel de commande (61), avec
- au moins un des systèmes suivants (62a) : système de radar primaire et système de réception radio,
- un deuxième système d'antenne (62b) et
- un deuxième système de réception (62c), qui est attribué au deuxième système d'antenne (62b) et est agencé pour recevoir par le deuxième système d'antenne (62b) des signaux de radar primaire et/ou des signaux radio des objets volants en tant que deuxièmes signaux de réception, et
sachant que concernant le procédé
- le système de commande (6)
- dans un type de fonctionnement normal, lorsqu'au moins les premiers signaux de réception sont reçus, fournit les signaux de commande en fonction d'au moins les premiers signaux de réception et les transmet au système de commutation (63), et
- dans un type de fonctionnement de rechute, lorsque les deuxièmes signaux de réception sont reçus mais pas les premiers signaux de réception, fournit les signaux de commande en fonction des deuxièmes signaux de réception et les transmet au système de commutation (63), et
- le système de commutation (63) enclenche en conséquence le système de signalisation (64) dans le type de fonctionnement normal et les signaux de commande respectifs dans le type de fonctionnement de rechute.
